Europäisches Patentamt

European Patent Office

Office européen des brevets

(11) Publication number: 0 241 932
A2

(12) EUROPEAN PATENT APPLICATION

(21) Application number: 87105643.8

(22) Date of filing: 16.04.87

(51) Int. Cl.4: G01K 7/22

(30) Priority: 17.04.86 JP 89130/86

(43) Date of publication of application:
21.10.87 Bulletin 87/43

(84) Designated Contracting States:
DE FR GB IT NL

(71) Applicant: KANEGAFUCHI KAGAKU KOGYO
KABUSHIKI KAISHA
2-4 Nakanoshima 3-chome
Kita-ku Osaka-shi Osaka-fu(JP)

(72) Inventor: Hosokawa, Yoichi Kanekasanseiso
6-31-17 Shioya-cho Tarumi-ku
Kobe-shi Hyogo-ken(JP)
Inventor: Yamaguchi, Minori
5-40 Higashihitomaru-cho
Akashi-shi Hyogo-ken(JP)
Inventor: Tawada, Yoshihisa
14-39 Oikemiyamadai Kita-ku
Kobe-shi Hyogo-ken(JP)

(74) Representative: Vossius & Partner
Siebertstrasse 4 P.O. Box 86 07 67
D-8000 München 86(DE)

(54) Temperature detector.

(57) A temperature detector comprising a semiconductor layer made of a p-type or n-type semiconductor material doped with an impurity. Said layer is either completely amorphous or substantially amorphous, in which case it contains microcrystals. The temperature detector has good sensitivity at a temperature of not more than 100 K in comparison to conventional temperature detectors, and shows good linearity concerning its change in resistivity upon changes in temperature over a wide temperature range.

FIG. 1

EP 0 241 932 A2

## TEMPERATURE DETECTOR

The present invention relates to a temperature detector, and more particularly to a temperature detector comprising semiconductors having good linearity concerning their change in resistivity upon changes in temperature at temperatures of not more than 100 K.

In general, there have been employed as a contact-type temperature detector a thermocouple, a resistance thermometer bulb utilizing a metal such as platinum or a thermistor utilizing a semiconductor, or the like.

Hitherto, at temperatures of not more than 100 K, one has often employed in an electronic circuit a temperature detector which uses a carbon solid resistor. This kind of sensor measures the temperature by utilizing the phenomenon that the resistivity of the solid carbon resistor varies according to the temperature. The solid carbon resistor is obtained by adding insulation powder such as clay, silica and talc to graphite, by further adding a binding material such as phenol resin and then hot-forming the obtained mixture.

The above-mentioned solid carbon resistor, however, has the disadvantage that the temperature dependency of the resistivity of graphite is complex and that the reproducibility of resistivity is poor. This is due to the fact that the resistor has either metallic or semiconductive properties according to the direction of the crystallographic axis. This is due to the very large anisotropy of graphite.

Further, one has hitherto employed a thermistor using germanium as a temperature detector. The thermistor comprises single crystals of germanium whereinto an impurity such as phosphorus is mixed. In this thermistor, the temperature is measured by detecting the change in resistivity when the temperature varies.

This kind of thermistor is superior to the above-mentioned solid carbon resistor in its reproducibility of resistivity. However, it has the disadvantages of being influenced by magnetic fields, of not being able to show a temperature dependency in one formula over a wide temperature range and of being too expensive.

The present invention was made in order to solve the above drawbacks and to provide a temperature detector having good linearity concerning its temperature dependency of resistivity even at temperatures of not more than 100 K.

In accordance with the present invention, there is provided a temperature detector comprising a semiconductor layer made of a p-type or n-type semiconductor material doped with an impurity. Said layer is either completely amorphous or substantially amorphous, in which case it contains microcrystals. The temperature detector of the present invention has good sensitivity at a temperature of not more than 100 K in comparison to conventional temperature detectors. It also has good linearity regarding its change in resistivity upon changes in temperature over a wide temperature range.

The above-mentioned semiconductor, whereto an impurity is added, mainly comprises elements of group IV of the Periodic Table and is a semiconductor made of a-Si or $\mu$c-Si (i.e. an alloy including 1 to 90 atom % of Si or other elements such as SiGe, SiC, SiSn or SiN). Among these alloys, SiGe is preferable since it has low resistance.

Fig. 1 is a sectional view of embodiment 1 of the temperature detector of the present invention;

Fig. 2 is a schematic view of the apparatus employed in producing the temperature detector of embodiment 1;

Fig. 3 is a sectional view of embodiment 2 of the temperature detector of the present invention;

Fig. 4 is a sectional view of embodiment 3 of the temperature detector of the present invention; and

Fig. 5 is a sectional view of embodiment 4 of the temperature detector of the present invention.

The following is an explanation of the temperature detector of the present invention as shown in the accompanying drawings.

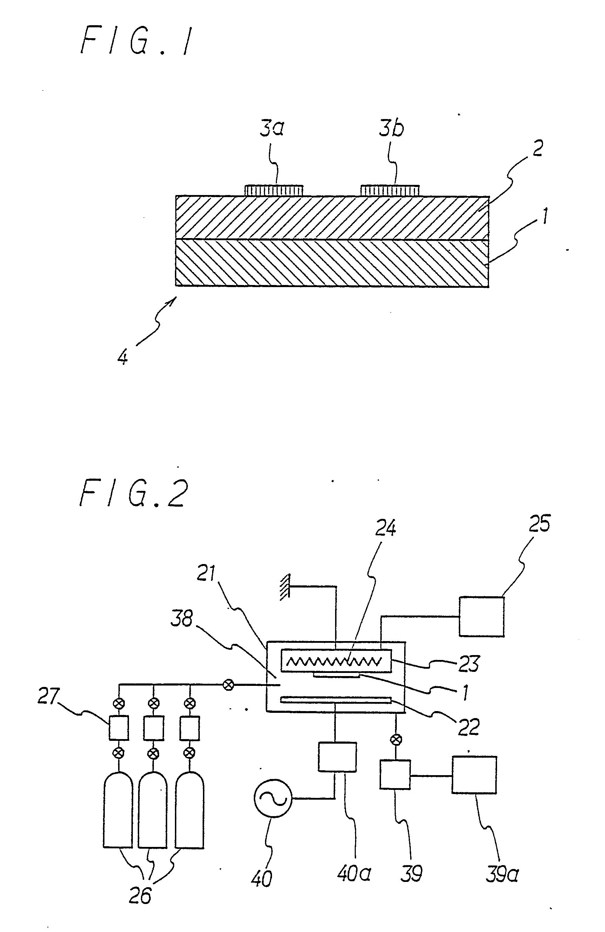

Fig. 1 shows the first embodiment (hereinafter referred to as embodiment 1) of the temperature detector of the present invention. In Fig. 1, numeral 1 is an insulating substrate made of glass whereto a semiconductor layer 2 is adhered, its upper surface and the upper surface of the insulating substrate 1 being kept substantially parallel. The semiconductor layer 2 comprises noncrystal hydrogenated silicon which contains microcrystals whereto phosphorus is added as an impurity. The coplanar-type Al electrodes 3a and 3b are adhered to part of the upper surface of the semiconductor layer 2. Neither the area covered by each Al electrode nor the distance between two electrodes is particularly limited, but may be properly determined. The thickness of the insulating substrate 1, the semiconductor layer 2 and the electrodes 3a and 3b is preferably 1 $\mu$m to 5000 $\mu$m, 0.003 $\mu$m to 10 $\mu$m and 0.01 $\mu$m to 1 $\mu$m, respectively. The temperature detector 4 consists of the insulating substrate 1, the semiconductor layer 2 and the electrodes 3a and 3b.

In the temperature detector 4 of embodiment 1 having the above construction, the temperature is measured by connecting the electrodes 3a and 3b to a positive power electrode and a negative power electrode respectively (the reverse connection is of course employable) using lead wires (not shown in Fig. 1), by letting a direct current flow through the semiconductor layer 2 and by measuring the electric resistance of the semiconductor layer 2 between the electrode 3a and electrode 3b.

The following is an explanation of the method for producing a temperature detector of embodiment 1.

Fig. 2 shows the apparatus employed in producing the temperature detector of embodiment 1. The apparatus shown in Fig. 2 is typical of those in which the CVD method (Chemical Vapour Deposition method) is carried out. In Fig. 2, numeral 21 is a vacuum vessel wherein a cathode electrode 22 and an anode electrode 23, opposed to the cathode electrode 22, are disposed. In the anode electrode 23, there is provided a heater 24 which heats the anode electrode 23 by the power source 25.

Gases such as $SiH_4$, $PH_3$ and $H_2$, which constitute the semiconductor layer, are introduced into the vacuum vessel 21 from gas bombs 26 via flow controllers 27 and an inlet port 38. The gases in the vacuum vessel 21 are exhausted by a pump 39 through the apparatus for the treatment of exhaust gas 39a. High frequency voltage is applied to the cathode electrode 22 by a high frequency power supply 40 via a matching circuit 40a. On the anode electrode 23 there is fixed the insulating substrate 1 whereon the semiconductor layer 2 is formed.

By carrying out glow discharge in a mixed gas of $SiH_4$, $PH_3$ and $H_2$ there is obtained a semiconductor layer 2 having a thickness of 1 μm and comprising amorphous hydrogenated silicon which contains microcrystals on an insulating substrate 1 made of glass having a thickness of 700 μm, the substrate being available from the Corning Corporation under the commercial name of Corning 7059. The temperature detector 4 can be obtained by forming the Al electrode 3a and 3b having a thickness of 0.3 μm on the semiconductor layer 2 using the vacuum deposition method.

In the following, other embodiments of the temperature detector of the present invention are explained.

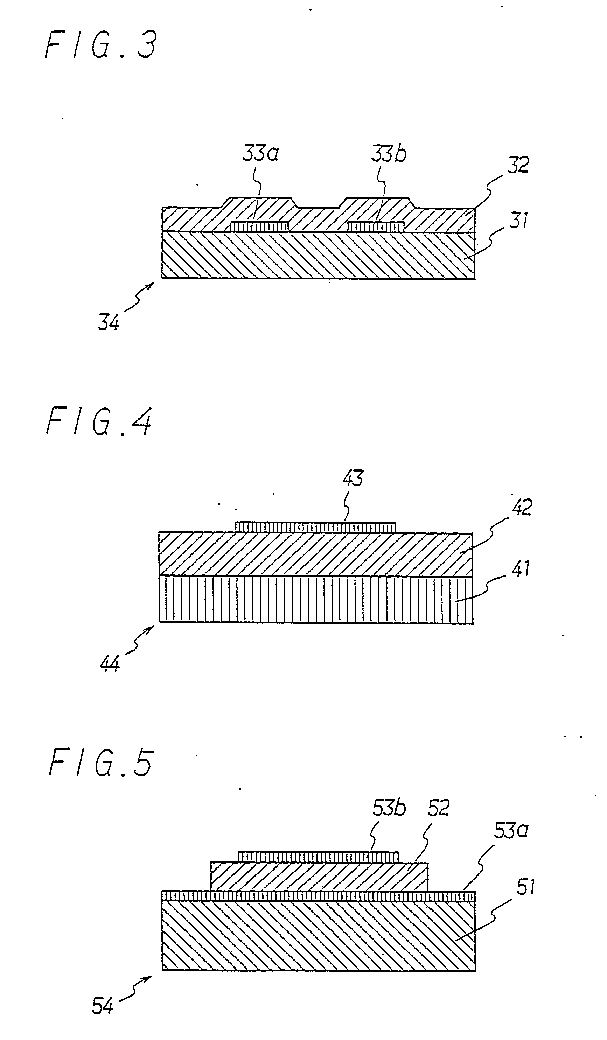

Fig. 3 shows the second embodiment (hereinafter referred to as embodiment 2) of the temperature detector of the present invention. In Fig. 3, numeral 31 is an insulating substrate similar to the insulating substrate 1 in embodiment 1. The coplanar-type Al electrodes 33a and 33b are adhered to a part of the upper surface of the insulating substrate 31. Neither the area covered by each Al electrode nor the distance between two electrodes is particularly limited but may be properly determined. Further, on the upper surface of the substrate 31 there is formed a semiconductor layer 32 which covers the electrodes 33a and 33b. The thickness of the insulating substrate 31, the semiconductor layer 32 and the electrodes 33a and 33b is preferably 1 μm to 5000 μm, 0.003 μm to 10 μm and 0.05 μm to 1 μm, respectively. The temperature detector 34 consists of the insulating substrate 31, the semiconductor layer 32 and the electrodes 33a and 33b. In the temperature detector 34 of embodiment 2, the temperature is measured by letting a direct current flow through the semiconductor 32 via the electrode 33a and electrode 33b.

Fig. 4 shows the third embodiment (hereinafter referred to as embodiment 3) of the temperature detector of the present invention. In Fig. 4, numeral 41 is a conductive substrate made of metal such as Al, Cu, Fe, TCO or crystalline Si. A semiconductor layer 42 of the same material as in embodiment 1 is adhered to the conductive substrate 41, the upper surface of the semiconductor layer 42 and that of the conductive substrate 41 being kept substantially parallel. A layer-shaped Al electrode 43 is adhered to the central part of the upper surface of the semiconductor layer 42. The area covered by the Al electrode 43 is not particularly limited, but may be properly determined. The thickness of the conductive substrate 41, the semiconductor layer 42 and the electrode 43 is preferably 50 μm to 5000 μm, 0.1 μm to 10 μm and 0.05 μm to 1 μm, respectively. The temperature detector 44 consists of the conductive substrate 41, the semiconductor layer 42 and the electrode 43. In the temperature detector embodiment 3, the electrode 43 and the conductive substrate 41 correspond to the electrodes 3a and 3b in embodiment 1 respectively. The temperature is measured by letting a direct current flow through the semiconductor layer 42 via the electrode 43 and the conductive substrate 41 in the same way as in embodiment 1.

Fig. 5 shows the fourth embodiment (hereinafter referred as embodiment 4) of the temperature detector of the present invention. In Fig. 5, numeral 51 is an insulating substrate of the same material as in embodiment 1. A layer-shaped Al electrode 53a is adhered to the upper surface of the substrate 51, the area covered by the Al electrode 53a being the same as the upper surface of the substrate 51. On the upper surface of the electrode 53a there is adhered a semiconductor layer 52 of the same material as in embodiment 1, the area of the semiconductor layer 52 being a little smaller than that of the substrate 53a. Further, on the upper surface of the semiconductor layer 52 there is formed a layer-shaped Al electrode 53b having an area a little smaller than that of the semiconductor 52. The thickness of the insulating substrate 51, the semiconductor layer 52, the electrode 53a and the electrode 53b is preferably 50 μm to

5000 μm, 0.1 μm to 10 μm and 0.05 μm to 1 μm. The temperature detector 54 consists of the insulating substrate 51, the electrode 53a, the semiconductor layer 52 and the electrode 53b. In the temperature detector of embodiment 4, the temperature is measured by letting a direct current flow through the semiconductor layer 52 via the electrode 53a and the electrode 53b in the same way as in embodiment 1.

In the above-mentioned embodiments 1 to 4, the semiconductor layer is an amorphous phosphorus which contains microcrystals prepared by adding phosphorus of Group V of the Periodic Table as an impurity to a semiconductor. The semiconductor layer, however, can be obtained by adding boron of Group III of the Periodic Table as an impurity. Further, instead of an amorphous hydrogenated silicon, there can also be employed an amorphous silicon, an amorphous silicon carbide or a semiconductor including a partly microcrystal region such as μc-Si. If the resistance of an amorphous semiconductor layer increases, the resistance of the semiconductor can be decreased by microcrystallizing part of the amorphous semiconductor layer.

As described hereinbefore, the temperature detector of the present invention comprises a semiconductor layer which is made of a p-type or n-type semiconductor material doped with an impurity. Said layer is either completely amorphous or substantially amorphous, in which case it contains microcrystals. Accordingly, the linearity regarding changes in the resistance of the semiconductor layer upon changes in temperature can be improved in a wider temperature range in comparison to conventional temperature detectors at temperatures of not more than 100 K.

The superiority in linearity of the temperature detector of the present invention is shown in Table 1.

In Table 1, the linearity is estimated according to the following criteria.

A: excellent

B: very good

C: good

Table 1

| Temperature range | Linearity |
|---|---|
| 100 K to 77 K | C |
| 77 K to 50 K | C |
| 50 K to 20 K | B |
| 20 K to 4.2 K | A |

## Claims

1. A temperature detector comprising a semiconductor layer (2,32,42,52) which is made of a p-type or n-type semiconductor material doped with an impurity, and which is either completely amorphous or substantially amorphous, in which case it contains microcrystals.

2. The temperature detector of Claim 1, wherein the semiconductor comprises an element of Group IV of the Periodic Table or a compound thereof, and the inpurity comprises an element of Group III of the Periodic Table.

3. The temperature detector of Claim 1, wherein the semiconductor comprises an element of Group IV of the Periodic Table or a compound thereof, and the impurity comprises an element of Group V of the Periodic Table.

4. The temperature detector of any one of Claims 1 to 3, wherein the thickness of the semiconductor is 0.003 to 100 μm.

5. The temperature detector of any one of Claims 1 to 4, wherein the semiconductor layer is provided with two electrodes (3a, 3b; 33a,33b; 41,43; 53a, 53b) the two electrodes opposing each other and being in contact with the semconductor layer.

6. The temperature detector of any one of Claims 2 to 5, wherein the semiconductor material is silicon or a silicon compound.

7. The temperature detector of any one of Claims 2 to 5, wherein the semiconductor material is germanium or a germanium compound.

F I G . 1

F I G . 2

FIG.3

33a    33b    32

31

34

FIG.4

43

42

41

44

FIG.5

53b    52    53a

51

54